# EUROPÄISCHE PATENTSCHRIFT

(11) **EP 3 860 946 B1**
(45) Veröffentlichungstag und Bekanntmachung des Hinweises auf die Patenterteilung: **03.07.2024**
(21) Anmeldenummer: 19779750.9
(22) Anmeldetag: 20.09.2019
(51) Int. Cl.: C01B 3/16, C01B 3/52, C10J 3/00, C10K 1/00, C10K 1/04, C10K 3/04

(54) **VERFAHREN UND VORRICHTUNG ZUR ERZEUGUNG VON GASPRODUKTEN UNTER VERWENDUNG EINES SHIFT-KONVERTERS**
PROCESS AND APPARATUS FOR PRODUCING GAS PRODUCTS USING A SHIFT CONVERTER
PROCÉDÉ ET DISPOSITIF POUR LA GÉNÉRATION DE PRODUITS GAZEUX EN UTILISANT UN CONVERTISSEUR CATALYTIQUE

(30) Priorität: 05.10.2018 DE 102018007868
(43) Veröffentlichungstag der Anmeldung: 11.08.2021
(73) Patentinhaber: Linde GmbH, 82049 Pullach (DE)
(72) Erfinder: HEINZEL, Albrecht, 81479 München (DE); HASELSTEINER, Thomas, 83623 Dietramszell (DE)
(74) Vertreter: Fischer, Werner
(86) Internationale Anmeldenummer: PCT/EP2019/025311
(87) Internationale Veröffentlichungsnummer: WO 2020/069773

(56) Entgegenhaltungen:
- WO-A1-2013/088116
- WO-A1-2017/119914
- WO-A2-2009/019497
- DE-A1-102011 016 789
- GB-A- 2 515 169

## Beschreibung

Die Erfindung betrifft ein Verfahren zur Erzeugung eines wasserstoffhaltigen Gasprodukts in einer, einen geringeren Wasserstoffgehalt als eine erste aufweisenden, zweiten Modifikation, wobei ein Wasserdampf, Kohlenmonoxid und Wasserstoff enthaltendes und mit einem Wasserdampf/Kohlenmonoxid-Verhältnis (D/CO-Verhältnis) zwischen 1,8 und 2,5mol/mol bereitgestelltes Synthesegas mit Hilfe eines Shift-Konverters behandelt wird, um ein Zwischenprodukt zu erhalten, aus dem jeweils Wasser und Sauergase zur Gewinnung des wasserstoffhaltigen Gasprodukts abgetrennt werden, und wobei das Synthesegas dem Shift-Konverter in der bereitgestellten Form zugeführt wird, um das Gasprodukt in der ersten Modifikation zu erhalten, dadurch gekennzeichnet, dass das Verhältnis von Wasserdampf zu Kohlenmonoxid im Synthesegas durch die Abtrennung von Wasser stromaufwärts des Shift-Konverters auf einen Wert zwischen 0,1 und 0,6 mol/ mol eingestellt wird, um das Gasprodukt in der zweiten Modifikation zu gewinnen.

Weiterhin betrifft die Erfindung eine Vorrichtung zur Durchführung des erfindungsgemäßen Verfahrens.

Verfahren und Vorrichtungen der gattungsgemäßen Art werden insbesondere dazu eingesetzt, um in Erdölraffinerien Wasserstoff zu erzeugen, der im Regelfall in großen Mengen etwa für den Betrieb von Entschweflern und Hydrocrackern benötigt wird. Hierzu werden gewöhnlich schwere Raffinerierückstände gemeinsam mit einem Oxidationsmittel sowie Wasserdampf und evtl. Kohlendioxid in einem Vergaser durch Partielle Oxidation zu einem wasserstoff- und kohlenmonoxidreichen Stoffgemisch umgesetzt, das daneben auch Kohlendioxid, Wasserdampf sowie Feststoffe enthält, bei denen es sich vorwiegend um Rußpartikel handelt, die durch unvollständige Umsetzung des in den Einsätzen enthaltenen Kohlenstoffs entstehen. Das als Syntheserohgas bezeichnete Stoffgemisch, das den Vergaser mit einer Temperatur verlässt, die typischerweise zwischen 1300 und 1450°C liegt, wird zunächst im Wasserbad oder durch die Eindüsung von Wasser auf eine Temperatur von ca. 240°C abgekühlt (gequencht) und anschließend in einer Wasserwäsche weiterbehandelt, in der durch die Abtrennung von Feststoffen ein weitgehend aus Wasser, Wasserstoff, Kohlenmonoxid und Kohlendioxid bestehendes Synthesegas entsteht.

Zur Erhöhung der Wasserstoffausbeute wird das Synthesegas in einen Shift-Konverter eingeleitet, wo Kohlenmonoxid katalytisch in einer exothermen Shift-Reaktion mit Wasser gemäß der Gleichung

CO + H₂O ↔ H₂ + CO₂

zu Wasserstoff und Kohlendioxid konvertiert wird.

Gleichzeitig werden im Synthesegas vorhandene und im Gasprodukt unerwünschte Spurenkomponenten wie beispielsweise Metall-Carbonyle, Kohlenoxidsulfid (COS) und Blausäure (HCN) durch den im Shift-Konverter eingesetzten Katalysator zurückgehalten bzw. zu Stoffen umgewandelt, die mit geringem Aufwand aus dem im Shift-Konverter erhaltenen Zwischenprodukt entfernt werden können.

Üblicherweise wird der Shift-Konverter mit einem D/CO-Verhältnis zwischen 1,8 und 2,5, und damit einem deutlichen Wasserüberschuss betrieben, der für eine Verschiebung des Reaktionsgleichgewichts zur Wasserstoffseite sorgt und darüber hinaus eine Abmilderung der thermischen Belastung des Katalysators sowie die Unterdrückung unerwünschter Nebenreaktionen bewirkt. Gewöhnlich besitzt das Synthesegas bei seinem Austritt aus der Wasserwäsche ein entsprechendes D/CO-Verhältnis, so dass die Einstellung seines Wassergehalts stromaufwärts des Shift-Konverters nicht erforderlich ist.

Das Zwischenprodukt, das den Shift-Konverter mit einer Temperatur von ca. 450°C verlässt, wird einer im Folgenden als Zwischenproduktkühler bezeichneten Kühleinrichtung zugeführt, um Wasser auszukondensieren und ein weitgehend wasserfreies Gasgemisch mit einer Temperatur von ca. 40°C zur Weiterleitung in eine Sauergaswäsche zu gewinnen. In der Sauergaswäsche, bei der es sich etwa um eine Methanolwäsche handelt, wird aus dem Gasgemisch insbesondere durch die Abtrennung von Kohlendioxid und Schwefelkomponenten ein überwiegend aus Wasserstoff bestehendes, als Rohwasserstoff bezeichnetes Gasprodukt erhalten, das ggf. einer Feinreinigung unterzogen wird, um Wasserstoff mit der für seinen Einsatzzweck geforderten Reinheit zu erzeugen.

Der Zwischenproduktkühler umfasst normalerweise drei Wärmeübertragergruppen, die seriell zu einer Kühlkette verschaltet sind. Am Austritt jeder Wärmeübertragergruppe ist ein Kondensatabscheider angeordnet, der aus dem bei der vorangegangenen Abkühlung entstandenen zweiphasigen Stoffgemisch insbesondere kondensiertes Wasser abtrennt und eine Gasphase zur Weiterleitung in die nächstfolgende Wärmeübertragergruppe oder die Sauergaswäsche erzeugt. In der ersten Wärmeübertragergruppe werden beispielsweise anzuwärmendes bzw. zu verdampfendes Kesselspeisewasser und/oder Prozesskondensat oder zu überhitzender Dampf als Kühlmedien eingesetzt, während in der nachfolgenden, zweiten Wärmeübertragergruppe neben diesen Stoffen auch Kühlluft und Kühlwasser verwendet werden können. In der dritten und letzten Wärmeübertragergruppe dienen schließlich Luft- und Wasserkühler dazu, die Gasphase mit einer für die Einleitung in die Sauergaswäsche geeigneten Temperatur zu erhalten.

Falls in der Raffinerie einer oder mehrere Wasserstoffverbraucher beispielsweise aufgrund von Wartungsarbeiten ausfallen, sinkt der Wasserstoffbedarf vorübergehend und die Wasserstoffproduktion muss entsprechend angepasst werden. Die naheliegende Möglichkeit, für diesen Zweck die Wasserstoffproduktionsanlage in Teillast zu betreiben, entfällt allerdings, da eine konstante Abnahme der für die Synthesegaserzeugung eingesetzten schweren Raffinerierückstände, die permanent anfallen und anderweitig nicht verwertbar sind, zu jeder Zeit gewährleitet sein muss. Das Synthesegas wird daher unabhängig von dem gesunkenen Wasserstoffbedarf mit konstanter Menge erzeugt, jedoch unterschiedlich weiterbehandelt, so dass anstatt des Rohwasserstoffs ein Gasprodukt erhalten wird, das neben Wasserstoff auch einen größeren Kohlenmonoxidanteil aufweist, und das daher beispielsweise als Brenngas für eine Turbine abgegeben werden kann.

Um das Gasprodukt in einer Turbine einsetzen zu können, sollte sein Kohlenmonoxidgehalt über und sein Wasserstoffgehalt unterhalb von 35Vol.-% liegen, da ansonsten die maximal zulässige Flammentemperatur überschritten würde. Nach dem Stand der Technik wird daher nur ein Teil des Synthesegases in den Shift-Konverter geleitet, während der Rest im Bypass zum Shift-Konverter geführt und anschließend mit dem konvertierten Teilstrom zum Zwischenprodukt vereinigt wird. Hierbei wird jedoch stets eine Mindestmenge des im Synthesegas vorliegenden Kohlenmonoxids zu Wasserstoff konvertiert, da ein Shift-Konverter nur eingeschränkt funktionsfähig ist bzw. sogar beschädigt werden kann, wenn er mit weniger als 25% seiner Nennlast betrieben wird. Nachteilig bei dieser Art der Verfahrensführung ist es auch, dass die in dem zum Shift-Konverter im Bypass geführten Teil des Synthesegases vorliegenden, im Gasprodukt unerwünschte Spurenkomponenten nicht am Shift-Katalysator zurückgehalten bzw. umgewandelt werden und daher kostenintensiv stromaufwärts der Sauergaswaschäsche in einer im Normalbetrieb nicht genutzten Reinigungsstufe entfernt werden müssen.

Aufgabe der vorliegenden Erfindung ist es daher, ein Verfahren sowie eine Vorrichtung der gattungsgemäßen Art anzugeben, die geeignet sind, die beschriebenen Nachteile des Standes der Technik zu überwinden.

Die gestellte Aufgabe wird verfahrensseitig erfindungsgemäß dadurch gelöst, dass das Synthesegas dem Shift-Konverter in der bereitgestellten Form zugeführt wird, um das Gasprodukt in der ersten Modifikation zu erhalten, während das Verhältnis von Wasserdampf zu Kohlenmonoxid im Synthesegas durch die Abtrennung von Wasser stromaufwärts des Shift-Konverters auf einen Wert zwischen 0,1 und 0,6mol/mol eingestellt wird, um das Gasprodukt in der zweiten Modifikation zu gewinnen.

Die Erfindung macht es sich zunutze, dass die Wassergas-Shift-Reaktion bei einem D/CO-Verhältnis des Synthesegases von weniger als 1,0 nicht oder nur sehr eingeschränkt abläuft und das im Synthesegas enthaltene Kohlenmonoxid daher nicht oder nur zu einem geringen Teil zu Wasserstoff umgesetzt wird. Das Zwischenprodukt fällt daher mit einem H₂/CO-Verhältnis an, das weitgehend demjenigen des Synthesegases entspricht. Das geringe D/CO-Verhältnis wirkt sich nicht auf die Fähigkeit des Shift-Katalysators aus, im Gasprodukt unerwünschte Spurenkomponenten zurückzuhalten oder umzuwandeln, so dass das aus dem Shift-Konverter abgezogene Zwischenprodukt weitgehend frei von derartigen Stoffen ist.

Wird das Gasprodukt in der ersten Modifikation erzeugt, sieht das Verfahren vor, das den Shift-Konverter mit einer Temperatur von typischerweise ca. 270°C verlassende Zwischenprodukt zur Abkühlung und der Entfernung von Wasser durch einen Zwischenproduktkühler zu leiten, der wenigstens drei seriell zu einer Kühlkette verschaltete Wärmeübertragergruppen umfasst. Am Ende jeder Wärmeübertragergruppe wird bei der Abkühlung entstehendes Kondensat von der Gasphase abgetrennt, bevor die Gasphase zur weiteren Abkühlung in die folgende Wärmeübertragergruppe oder zur Entfernung von Sauergasen in eine Sauergasabtrenneinrichtung weitergeleitet wird.

Das Zwischenprodukt tritt vorzugsweise in die erste Wärmeübertragergruppe mit der Temperatur ein, mit der es den Shift-Konverter verlässt, während eine weitgehend wasserfreie Gasphase aus der letzten Wärmeübertragergruppe mit einer Temperatur austritt, die eine Behandlung der Gasphase in der Sauergasabtrenneinrichtung erlaubt. Besonders bevorzug wird das Zwischenprodukt zur Abkühlung und der Entfernung von Wasser durch einen genau drei Wärmeübertragergruppen umfassenden Zwischenproduktkühler geleitet.

Sinnvollerweise wird das bereitgestellte Synthesegas zur Abtrennung von Wasser und der Einstellung des D/CO-Verhältnisses auf den für die Erzeugung des Gasprodukts in der zweiten Modifikation erforderlichen Wert ebenfalls abgekühlt, um Wasserdampf in erforderlichem Maß auszukondensieren. Das bei der Abkühlung des Synthesegases entstehende Kondensat wird abgeschieden, um das im Wassergehalt reduzierte Synthesegas zur Weiterleitung in den Shift-Konverter sowie eine wasserreiche Flüssigphase zu erhalten.

Ganz besonders bevorzugt wird das bereitgestellte Synthesegas zur Abtrennung von Wasser und der Einstellung des D/CO-Verhältnisses durch eine oder mehrere der Wärmeübertragergruppen des Zwischenproduktkühlers geleitet. Da die Temperatur des Synthesegases wesentlich geringer ist, als die Temperatur des bei der Erzeugung des Gasprodukts in der ersten Modifikation im Shift-Konverter erhaltenen Zwischenprodukts, wird das Synthesegas sinnvollerweise in eine Wärmeübertragergruppe eingeleitet, die stromabwärts der ersten Wärmeübertragergruppe des Zwischenproduktkühlers angeordnet ist. Nach der Abtrennung von auskondensiertem Wasser, wird das im Wassergehalt reduzierte Synthesegas über einen stromaufwärts der letzten Wärmeübertragergruppe gelegenen Entnahmepunkt aus dem Zwischenproduktkühler abgezogen und in den Shift-Konverter eingeleitet. In diesem Betriebsmodus sind sämtliche von Synthesegas durchströmten Wärmeübertragergruppen für das Zwischenprodukt gesperrt, für dessen Abkühlung jedoch die übrigen Wärmeübertragergruppen genutzt werden können.

Aufgrund des niedrigen D/CO-Verhältnisses des im Wassergehalt reduzierten Synthesegases, wird im Shift-Konverter eine vergleichsweise geringe Wärmemenge freigesetzt, so dass das Zwischenprodukt den Shift-Konverter mit einer Temperatur verlässt, die nur wenig höher ist, als die Temperatur, mit der das im Wassergehalt reduzierte Synthesegas in den Shift-Konverter ein- bzw. aus dem Zwischenproduktkühler austritt. Zweckmäßigerweise wird daher bei der Gewinnung des Gasprodukts in der zweiten Modifikation das Zwischenprodukt zu seiner Abkühlung stromabwärts des Entnahmepunkts für das im Wassergehalt reduzierte Synthesegas, jedoch stromaufwärts der letzten Wärmeübertragergruppe in den Zwischenproduktkühler eingeleitet.

Weiterhin betrifft die Erfindung eine Vorrichtung zur Erzeugung eines wasserstoffhaltigen Gasprodukts gemäß Anspruch 6.

Die gestellte Aufgabe wird vorrichtungsseitig erfindungsgemäß dadurch gelöst, dass die Zuführeinrichtung einen ersten und einen, einen Gastrockner aufweisenden zweiten Strömungsweg sowie eine Umschalteinrichtung umfasst, mit der das Synthesegas entweder über den ersten oder den zweiten Strömungsweg geleitet werden kann, wobei das Synthesegas dem Shift-Konverter über den ersten Strömungsweg in der bereitgestellten Form zuführbar ist, um das Gasprodukt in der ersten Modifikation zu erhalten, während das Synthesegas zur Gewinnung des Gasprodukts in der zweiten Modifikation über den zweiten Strömungsweg zum Shift-Konverter geführt wird, wobei im Gastrockner das Verhältnis von Wasserdampf zu Kohlenmonoxid im Synthesegas durch Wasserabtrennung auf einen Wert zwischen 0,1 und 0,6mol/mol einstellbar ist.

Vorzugsweise umfasst die Abtrenneinrichtung einen Zwischenproduktkühler in dem das bei der Erzeugung des Gasprodukts in der ersten Modifikation im Shift-Konverter erhältliche Zwischenprodukt abgekühlt und getrocknet werden kann. Besonders bevorzugt weist der Zwischenproduktkühler wenigstens drei seriell zu einer Kühlkette verschaltete Wärmeübertragergruppen auf, an deren jeweiligen Ende ein Abscheider angeordnet ist, mit dem ein bei der Abkühlung entstehendes zweiphasiges Stoffgemisch in eine Gas- und eine Flüssigphase getrennt werden kann. Ein Abscheider ist dabei entweder mit einer weiteren Wärmeübertragergruppe des Zwischenproduktkühlers oder mit einer zur Abtrenneinrichtung gehörenden Sauergasabtrenneinrichtung verbunden, so dass die im Abscheider erhaltene Gasphase entweder zur weiteren Abkühlung und Trocknung in die weitere Wärmeübertragergruppe oder zur Entfernung von Sauergasen in die Sauergasabtrenneinrichtung weitergeleitet werden kann.

Der Gastrockner umfasst zweckmäßigerweise eine Kühleinrichtung sowie einen Abscheider, mit dem bei der Abkühlung des Synthesegases in der Kühleinrichtung entstandenes Kondensat von der Gasphase abgetrennt werden kann. Besonders bevorzugt handelt es sich bei dem Gastrockner um wenigstens eine der Wärmeübertragergruppen des Zwischenproduktkühlers. In dieser Version der erfindungsgemäßen Vorrichtung ist der Zwischenproduktkühler gleichzeitig zur Trocknung des Synthesegases und zur Abkühlung und Trocknung des im Shift-Konverter erhältlichen Zwischenprodukts einsetzbar, wobei eine als Gastrockner eingesetzte Wärmeübertragergruppe für die Behandlung des Zwischenprodukts gesperrt ist. Sinnvollerweise ist eine als Gastrockner einsetzbare Wärmeübertragergruppe stromabwärts der ersten Wärmeübertragergruppe des Zwischenproduktkühlers angeordnet.

Ist der Zwischenproduktkühler mit genau drei Wärmeübertragergruppen ausgeführt, so ist erfindungsgemäß vorgesehen, dass die zweite Wärmeübertragergruppe als Gastrockner einsetzbar ist, während die stromabwärts der zweiten angeordnete dritte Wärmeübertragergruppe zur Abkühlung und Trocknung des bei der Gewinnung des Gasprodukts in der zweiten Modifikation anfallenden Zwischenprodukts verwendet werden kann.

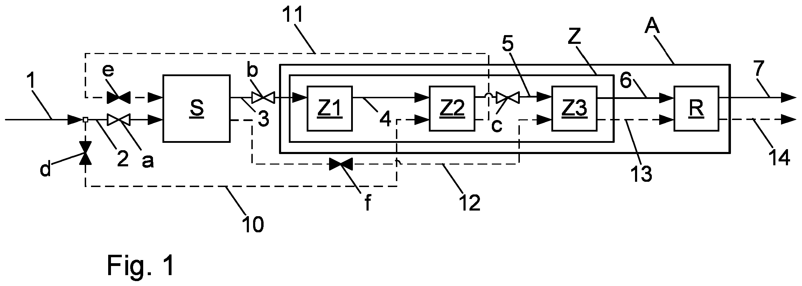

Im Folgenden soll die Erfindung anhand eines in der **Figur 1** schematisch dargestellten Ausführungsbeispiels näher erläutert werden.

Die Figur 1 zeigt eine bevorzugte Variante der Erfindung. Stoffströme, Leitungen und Ventile, die bei der Erzeugung des Gasprodukts in der ersten Modifikation anfallen bzw. durchströmt werden, sind mit durchgezogenen Linien dargestellt, während die ausschließlich bei der Erzeugung des Gasprodukts in der zweiten Modifikation anfallende Stoffströme bzw. durchströmten Leitungen und Ventile mit gestrichelten Linien bzw. mit schwarzer Füllung dargestellt sind.

Über Leitung 1 wird ein Wasserstoff, Kohlenmonoxid sowie Wasser enthaltendes Synthesegas mit einer Temperatur von ca. 240°C und einem D/CO-Verhältnis zwischen 1,8 und 2,5mol/mol bereitgestellt. Um ein Gasprodukt 7 in einer ersten, weitgehend aus Wasserstoff bestehenden und kohlenmonoxidfreien Modifikation zu erzeugen, wird das beispielsweise durch die Vergasung von schweren Raffinerierückständen erhaltene Synthesegas 1 über Leitung 2 und das Absperrorgan a unmittelbar in den Shift-Konverter S eingeleitet, wo das im Synthesegas 1 enthaltene Kohlenmonoxid mit Wasser in einer katalytisch unterstützten exothermen Shift-Reaktion zu Wasserstoff und Kohlendioxid umgesetzt wird. Im Synthesegas 1 ebenfalls enthaltene, im Gasprodukt aber unerwünschte Stoffe, wie Metall-Carbonyle, Kohlenoxidsulfid und Blausäure, werden am Katalysator zurückgehalten oder zersetzt, so dass derartige Stoffe stromabwärts des Shift-Konverters S praktisch nicht vorhanden sind. Das wegen der bei der Shift-Reaktion freigesetzten Wärme mit einer Temperatur von ca. 270°C aus dem Shift-Konverter S austretende, weitgehend aus Wasser, Kohlendioxid und Wasserstoff bestehende Zwischenprodukt 3 wird über das Absperrorgan b der Abtrenneinrichtung A zugeführt, in der es zunächst den Zwischenproduktkühler Z durchströmt.

Der Zwischenproduktkühler Z umfasst drei Wärmeübertragergruppen Z1, Z2 und Z3, die seriell zu einer Kühlkette verschaltet sind, in der das Zwischenprodukt 3 stufenweise bis auf ca. 40°C abgekühlt und dabei getrocknet wird. Am Austritt jeder Wärmeübertragergruppe wird im Zwischenprodukt 3 enthaltenes und während der vorangegangenen Abkühlung kondensiertes Wasser in einem Kondensatabscheider (nicht dargestellt) abgetrennt, so dass jeweils eine getrocknete Gasphase erhalten wird. Während die erste getrocknete Gasphase 4 aus der ersten Wärmeübertragergruppe Z1 und die zweite getrocknete Gasphase 5 über das Absperrorgan c aus der zweiten Wärmeübertragergruppe Z2 jeweils zur weiteren Trocknung in die nächstfolgende Wärmeübertragergruppe weitergeführt werden, liegt die dritte getrocknete Gasphase 6 aus der dritten Wärmeübertragergruppe Z3 mit einer Temperatur und einem Wassergehalt vor, die seine Weiterleitung in die zur Abtrenneinrichtung A gehörende Sauergaswäsche R erlauben. Das Zwischenprodukt 3 wird in der ersten Wärmeübertragergruppe Z1 beispielsweise gegen anzuwärmendes Kesselspeisewasser und/oder Prozesskondensat bis auf ca. 200°C und in der nachfolgenden, zweiten Wärmeübertragergruppe Z2 etwa bei der Erzeugung von Niederdruckdampf und der Anwärmung von demineralisiertem Wasser bis auf ca. 150°C abgekühlt. In der dritten und letzten Wärmeübertragergruppe Z3 können Luft-und Wasserkühler dazu eingesetzt werden, um die getrocknete Gasphase 6 weitgehend wasserfreie und mit einer Temperatur von ca. 40°C zu gewinnen.

In der Sauergaswäsche R, bei der es sich beispielsweise um eine Methanolwäsche handelt, werden von der dritten getrockneten Gasphase 6 Kohlendioxid und andere Sauergase abgetrennt, wobei das Gasprodukt 7 in der ersten Modifikation als Rohwasserstoff erhalten wird. Aus dem Rohwasserstoff 7 kann in einem Druckwechseladsorber (nicht dargestellt) Reinwasserstoff zur Abgabe an einen Verbraucher erzeugt werden.

Um ein Gasprodukt 14 in einer, einen geringeren Wasserstoffgehalt, als die erste aufweisenden zweiten Modifikation zu erzeugen, werden die mit weißer Füllung gezeichneten Ventile geschlossen und die mit schwarzer Füllung dargestellten Ventile geöffnet, wodurch sich für das Synthesegas 1 ein neuer Strömungsweg zum Shift-Reaktor S ergibt. Über Leitung 10 und das Absperrorgan d wird Synthesegas 1 im Bypass zum Shift-Konverter S der als Synthesegastrockner fungierenden Wärmeübertragergruppe Z2 des Zwischenproduktkühlers Z zugeführt, um das D/CO-Verhältnis im Synthesegas durch das Auskondensieren von Wasser einzustellen. Mit einem D/CO-Verhältnis zwischen 0,1 und 0,6mol/mol und einer Temperatur von ca. 185°C verlässt das getrocknete Synthesegas 11 die Wärmeübertragergruppe Z2, um über das Ventil e dem Shift-Konverter S zugeführt zu werden. Aufgrund des geringen Dampfgehalts des getrockneten Synthesegases 11 läuft die exotherme Shift-Reaktion nicht oder nur sehr eingeschränkt ab und das im Synthesegas enthaltene Kohlenmonoxid wird nicht oder nur zu einem sehr geringen Teil zu Wasserstoff umgesetzt. Das Zwischenprodukt 12 fällt daher mit einem H₂/CO-Verhältnis an, das weitgehend demjenigen des Synthesegases 1 entspricht. Das geringe D/CO-Verhältnis des getrockneten Synthesegases 11 wirkt sich nicht auf die Fähigkeit des im Shift-Konverter S eingesetzten Katalysators aus, im Gasprodukt 14 unerwünschte Spurenkomponenten zurückzuhalten oder umzuwandeln, so dass das Zwischenprodukt 12 weitgehend frei von derartigen Stoffen ist.

Da wegen der nicht oder nur sehr eingeschränkt ablaufenden Shift-Reaktion im Shift-Konverter S keine oder nur eine sehr geringe Wärmemenge freigesetzt wird, kann das Zwischenprodukts 12 zur Abkühlung und Trocknung über das Ventil f in die dritte Wärmeübertragergruppe Z3 eingeleitet werden kann, aus der eine weitgehend wasserfreie und aus Kohlendioxid, Kohlenmonoxid und Wasserstoff bestehende Gasphase 13 abgezogen und der Sauergaswäsche R zugeführt wird. In der Sauergaswäsche R werden von der Gasphase 13 Kohlendioxid und andere Sauergase abgetrennt, wobei das Gasprodukt 14 in der zweiten Modifikation erhalten wird, die im Wesentlichen aus dem im Synthesegas 1 enthaltenen Kohlenmonoxid und Wasserstoff besteht und beispielsweise als Brennstoff in einer Gasturbine (nicht dargestellt) eingesetzt werden kann.

## Patentansprüche

1. Verfahren zur Erzeugung eines wasserstoffhaltigen Gasprodukts in einer, einen geringeren Wasserstoffgehalt als eine erste Modifikation (7) aufweisenden, zweiten Modifikation (14), wobei ein Wasserdampf, Kohlenmonoxid und Wasserstoff enthaltendes und mit einem Wasserdampf/Kohlenmonoxid-Verhältnis (D/CO-Verhältnis) zwischen 1,8 und 2,5mol/mol bereitgestelltes Synthesegas (1) mit Hilfe eines Shift-Konverters (S) behandelt wird, um ein Zwischenprodukt (3, 12) zu erhalten, aus dem Wasser und Sauergase zur Gewinnung des wasserstoffhaltigen Gasprodukts (7, 14) abgetrennt werden, und wobei das Synthesegas (2) dem Shift-Konverter (S) in der bereitgestellten Form zugeführt wird, um das Gasprodukt in der ersten Modifikation (7) zu erhalten, **dadurch gekennzeichnet, dass** das Verhältnis von Wasserdampf zu Kohlenmonoxid im Synthesegas (11) durch die Abtrennung von Wasser stromaufwärts des Shift-Konverters (S) auf einen Wert zwischen 0,1 und 0,6mol/mol eingestellt wird, um das Gasprodukt in der zweiten Modifikation (14) zu gewinnen.

2. Verfahren nach Anspruch 1, **dadurch gekennzeichnet, dass** das bereitgestellte Synthesegas (1) zur Abtrennung von Wasser und der Einstellung des D/CO-Verhältnisses auf den für die Erzeugung des Gasprodukts in der zweiten Modifikation (14) erforderlichen Wert abgekühlt wird, um Wasserdampf in erforderlichem Maß auszukondensieren.

3. Verfahren nach einem der Ansprüche 1 oder 2, **dadurch gekennzeichnet, dass** das bei der Erzeugung des Gasprodukts in der ersten Modifikation (7) erhaltene Zwischenprodukt (3) zur Abkühlung und der Entfernung von Wasser durch einen Zwischenproduktkühler (Z) geleitet wird, der wenigstens drei seriell zu einer Kühlkette verschaltete Wärmeübertragergruppen (Z1, Z2, Z3) umfasst, und dass das bereitgestellte Synthesegas (1) zur Abtrennung von Wasser und der Einstellung des D/CO-Verhältnisses auf den für die Erzeugung des Gasprodukts in der zweiten Modifikation (14) erforderlichen Wert durch eine oder mehrere der Wärmeübertragergruppen des Zwischenproduktkühlers (Z) geleitet wird.

4. Vorrichtung zur Erzeugung eines wasserstoffhaltigen Gasprodukts in einer, einen geringeren Wasserstoffgehalt als eine erste Modifikation (7) aufweisenden, zweiten Modifikation (14), mit einem Shift-Konverter (S) und einer Zuführeinrichtung, über die ein Wasserdampf, Kohlenmonoxid und Wasserstoff enthaltendes und mit einem Wasserdampf/Kohlenmonoxid-Verhältnis zwischen 1,8 und 2,5mol/mol bereitgestelltes Synthesegas dem Shift-Konverter zur Gewinnung eines Zwischenprodukts (3, 12) zuführbar ist, sowie einer Abtrenneinrichtung (A), mit der aus dem Zwischenprodukt (3, 12) das Gasprodukt (7, 14) durch die Abtrennung von Wasser und Sauergasen gewonnen werden kann, **dadurch gekennzeichnet, dass** die Zuführeinrichtung einen ersten (2) und einen, einen Gastrockner (Z2) aufweisenden, zweiten Strömungsweg (10 Z2, 11) sowie eine Umschalteinrichtung umfasst, mit der das Synthesegas (1) entweder über den ersten oder den zweiten Strömungsweg geleitet werden kann, wobei das Synthesegas (1) dem Shift-Konverter über den ersten Strömungsweg (2) in der bereitgestellten Form zuführbar ist, um das Gasprodukt in der ersten Modifikation (7) zu erhalten, während das Synthesegas (1) zur Gewinnung des Gasprodukts in der zweiten Modifikation (14) über den zweiten Strömungsweg (10, Z2, 11) zum Shift-Konverter (S) geführt wird, wobei im Gastrockner (Z2) das Verhältnis von Wasserdampf zu Kohlenmonoxid im Synthesegas durch Wasserabtrennung auf einen Wert zwischen 0,1 und 0,6mol/mol einstellbar ist.

5. Vorrichtung nach Anspruch 4, **dadurch gekennzeichnet, dass** die Abtrenneinrichtung (A) einen Zwischenproduktkühler (Z) umfasst, der wenigstens drei seriell zu einer Kühlkette verschaltete Wärmeübertragergruppen (Z1, Z2, Z3) aufweist, an deren jeweiligen Ende ein Abscheider angeordnet ist, mit dem ein bei der Abkühlung entstehendes zweiphasiges Stoffgemisch in eine Gas- und eine Flüssigphase getrennt werden kann.

6. Vorrichtung nach einem der Ansprüche 4 oder 5, **dadurch gekennzeichnet, dass** der Gastrockner (Z2) eine Kühleinrichtung sowie einen Abscheider umfasst, mit dem bei der Abkühlung des Synthesegases (1) in der Kühleinrichtung entstandenes Kondensat von der Gasphase (11) abgetrennt werden kann.

7. Vorrichtung nach Anspruch 5, **dadurch gekennzeichnet, dass** es sich bei dem Gastrockner um wenigstens eine der Wärmeübertragergruppen (Z2) des Zwischenproduktkühlers (Z) handelt.

## Claims

1. Method for producing a hydrogen-containing gas product in a second modification (14) having a lower hydrogen content than a first modification (7), wherein a synthesis gas (1) that contains steam, carbon monoxide and hydrogen and is provided with a steam/carbon monoxide ratio (S/CO ratio) between 1.8 and 2.5 mol/mol being treated using a shift converter (S) to obtain an intermediate product (3, 12) from which water and acid gases are separated to obtain the hydrogen-containing gas product (7, 14), and the synthesis gas (2) being supplied to the shift converter (S) in the form in which it is provided to obtain the gas product in the first modification (7), **characterized in that** the ratio of steam to carbon monoxide in the synthesis gas (11) is adjusted to a value between 0.1 and 0.6 mol/mol by the separation of water upstream of the shift converter (S) to obtain the gas product in the second modification (14).

2. Method according to claim 1, **characterized in that** the provided synthesis gas (1) is cooled to separate water and adjust the S/CO ratio to the value required for producing the gas product in the second modification (14) in order to condense out steam to the required extent.

3. Method according to either claim 1 or 2, **characterized in that** the intermediate product (3) obtained during the production of the gas product in the first modification (7) is passed through an intermediate product cooler (Z) for cooling and for removing water, which intermediate product cooler comprises at least three heat exchanger groups (Z1, Z2, Z3) connected in series to form a cooling chain, and **in that** the synthesis gas (1) provided is passed through one or more of the heat exchanger groups of the intermediate product cooler (Z) for separating water and for adjusting the S/CO ratio to the value required for the production of the gas product in the second modification (14).

4. Apparatus for producing a hydrogen-containing gas product in a second modification (14) having a lower hydrogen content than a first modification (7), having a shift converter (S) and a supply device via which a synthesis gas containing steam, carbon monoxide and hydrogen and provided with a steam/carbon monoxide ratio of between 1.8 and 2.5 mol/mol can be supplied to the shift converter to obtain an intermediate product (3, 12), and a separation device (A) with which the gas product (7, 14) can be obtained from the intermediate product (3, 12) by the separation of water and acid gases, **characterized in that** the supply device comprises a first flow path (2) and a second flow path (10 Z2, 11) that has a gas dryer (Z2), and a switchover device with which the synthesis gas (1) can be guided either via the first or the second flow path, wherein the synthesis gas (1) being able to be supplied via the first flow path (2) to the shift converter in the provided form in order to obtain the gas product in the first modification (7), while the synthesis gas (1) is guided via the second flow path (10, Z2, 11) to the shift converter (S) in order to obtain the gas product in the second modification (14), the ratio of steam to carbon monoxide in the synthesis gas being adjustable to a value of between 0.1 and 0.6 mol/mol in the gas dryer (Z2) by water separation.

5. Apparatus according to claim 4, **characterized in that** the separating device (A) comprises an intermediate product cooler (Z) which has at least three heat exchanger groups (Z1, Z2, Z3) connected in series to form a cooling chain, at the respective ends of which a separator is arranged, by means of which a two-phase mixture of substances produced during cooling can be separated into a gas phase and a liquid phase.

6. Apparatus according to either claim 4 or 5, **characterized in that** the gas dryer (Z2) comprises a cooling device and a separator, by means of which condensate formed in the cooling device during cooling of the synthesis gas (1) can be separated from the gas phase (11).

7. Apparatus according to claim 5, **characterized in that** the gas dryer is at least one of the heat exchanger groups (Z2) of the intermediate product cooler (Z).

## Revendications

1. Procédé pour la production d'un produit gazeux contenant de l'hydrogène dans une seconde modification (14) présentant une teneur en hydrogène inférieure à celle d'une première modification (7), dans lequel un gaz de synthèse (1) contenant de la vapeur d'eau, du monoxyde de carbone et de l'hydrogène et fourni avec un rapport vapeur d'eau/monoxyde de carbone (rapport D/CC) compris entre 1,8 et 2,5 mol/mol est traité à l'aide d'un convertisseur catalytique (S) pour obtenir un produit intermédiaire (3, 12) duquel l'eau et les gaz acides sont séparés pour obtenir le produit gazeux contenant de l'hydrogène (7, 14), et dans lequel le gaz de synthèse (2) est introduit dans le convertisseur catalytique (S) sous la forme fournie pour obtenir le produit gazeux dans la première modification (7), **caractérisé en ce que** le rapport de la vapeur d'eau au monoxyde de carbone dans le gaz de synthèse (11) est réglé à une valeur comprise entre 0,1 et 0,6 mol/mol par la séparation d'eau en amont du convertisseur catalytique (S) pour obtenir le produit gazeux dans la seconde modification (14).

2. Procédé selon la revendication 1, **caractérisé en ce que** le gaz de synthèse (1) fourni est refroidi pour la séparation d'eau et le réglage du rapport D/CO à la valeur nécessaire pour la production du produit gazeux dans la seconde modification (14), afin de condenser la vapeur d'eau dans la mesure nécessaire.

3. Procédé selon l'une des revendications 1 ou 2, **caractérisé en ce que** le produit intermédiaire (3) obtenu lors de la production du produit gazeux dans la première modification (7) est conduit, pour le refroidissement et l'élimination d'eau, à travers un refroidisseur de produit intermédiaire (Z) qui comprend au moins trois groupes d'échangeurs de chaleur (Z1, Z2, Z3) connectés en série pour former une chaîne de froid, **et en ce que** le gaz de synthèse (1) fourni est conduit à travers un ou plusieurs des groupes d'échangeurs de chaleur du refroidisseur de produit intermédiaire (Z) pour la séparation d'eau et le réglage du rapport D/CO à la valeur nécessaire pour la production du produit gazeux dans la seconde modification (14).

4. Dispositif pour la production d'un produit gazeux contenant de l'hydrogène dans une seconde modification (14) présentant une teneur en hydrogène inférieure à celle d'une première modification (7), le dispositif comportant un convertisseur catalytique (S) et un moyen d'alimentation par l'intermédiaire duquel un gaz de synthèse contenant de la vapeur d'eau, du monoxyde de carbone et de l'hydrogène et fourni avec un rapport vapeur d'eau/monoxyde de carbone compris entre 1,8 et 2,5 mol/mol peut être amené au convertisseur catalytique pour obtenir un produit intermédiaire (3, 12), ainsi qu'un moyen de séparation (A), à l'aide duquel le produit gazeux (7, 14) peut être obtenu à partir du produit intermédiaire (3, 12) par la séparation d'eau et de gaz acides, **caractérisé en ce que** le moyen d'alimentation comprend une première voie d'écoulement (2) et une seconde voie d'écoulement (10, Z2, 11) présentant
un sécheur de gaz (Z2), ainsi qu'un moyen de commutation à l'aide duquel le gaz de synthèse (1) peut être conduit soit par l'intermédiaire de la première soit par l'intermédiaire de la seconde voie d'écoulement, dans lequel le gaz de synthèse (1) peut être amené au convertisseur catalytique par l'intermédiaire de la première voie d'écoulement (2) sous la forme fournie afin d'obtenir le produit gazeux dans la première modification (7), tandis que, pour obtenir le produit gazeux dans la seconde modification (14), le gaz de synthèse (1) est amené au convertisseur catalytique (S) par l'intermédiaire de la seconde voie d'écoulement (10, Z2, 11), dans lequel le rapport de la vapeur d'eau au monoxyde de carbone dans le gaz de synthèse peut être réglé dans le sécheur de gaz (Z2), par séparation d'eau, à une valeur comprise entre 0,1 et 0,6 mol/mol.

5. Dispositif selon la revendication 4, **caractérisé en ce que** le moyen de séparation (A) comprend un refroidisseur de produit intermédiaire (Z) qui présente au moins trois groupes d'échangeurs de chaleur (Z1, Z2, Z3) connectés en série pour former une chaîne de froid, un séparateur étant disposé aux extrémités respectives desdits groupes d'échangeurs de chaleur, à l'aide duquel un mélange de substances à deux phases se formant lors du refroidissement peut être séparé en une phase gazeuse et une phase liquide.

6. Dispositif selon l'une des revendications 4 ou 5, **caractérisé en ce que** le sécheur de gaz (Z2) comprend un moyen de refroidissement ainsi qu'un séparateur permettant de séparer de la phase gazeuse (11) un condensat formé lors du refroidissement du gaz de synthèse (1) dans le moyen de refroidissement.

7. Dispositif selon la revendication 5, **caractérisé en ce que** le sécheur de gaz est au moins l'un des groupes d'échangeurs de chaleur (Z2) du refroidisseur de produit intermédiaire (Z).
